# EUROPEAN PATENT APPLICATION

(11) **EP 3 569 429 A1**
(43) Date of publication of application: **20.11.2019**
(21) Application number: 19173601.6
(22) Date of filing: 09.05.2019
(51) Int. Cl.: B60H 1/00

(54) **VEHICULAR AIR CONDITIONER**

(30) Priority: 15.05.2018 JP 2018093740
(71) Applicant: Valeo Japan Co., Ltd., Kumagaya-shi, Saitama 360-0193 (JP)
(72) Inventor: NAGASAWA, Tomtomitsu, SAITAMA, 360-0193 (JP)
(74) Representative: Metz, Gaëlle

(57) **Abstract**

A vehicular air conditioner includes a casing (10, 10a, 70), a cooling heat exchanger (11, 71), and a heating heat exchanger (12, 72). The casing includes an upper outlet (13, 14) and a lower outlet (15) that are configured to blow out air into a cabin. The cooling heat exchanger (11, 71) is disposed in the casing (10, 10a, 70) . The heating heat exchanger (12, 72) is disposed in the casing (10, 10a, 70) and configured to heat the air that has flowed from the cooling heat exchanger (11, 71). The heating heat exchanger (12, 72) is disposed at such a position that an upper bypass (171, 771) and a lower bypass (172, 772) are respectively formed above and below the heating heat exchanger (12, 72). The air that has flowed from the cooling heat exchanger (11, 71) flows through the upper bypass (171, 771) and the lower bypass (172, 772). The vehicular air conditioner further includes a first cooled air guide (18, 2) configured to cause part of the air that has passed through the lower bypass (172, 772) to turn toward the upper outlet (15).

## Description

### BACKGROUND OF THE INVENTION

### 1. Field of the Invention

The present invention relates to a vehicular air conditioner to supply cooled air and heated air and, in particular, to a vehicular air conditioner with a cooled-air mixing function.

### 2. Description of the Related Art

Generally, a vehicular air conditioner mounted in an automobile is accommodated in a front portion of the interior of a cabin. Such an air conditioner for a vehicle includes a blower unit to take in the air inside and outside of the vehicle and an air conditioning unit to adjust temperature of the air taken in and supply cooled air and heated air into the cabin. The air conditioning unit includes a cooling heat exchanger and a heating heat exchanger in a casing and causes air mixing doors to regulate a flow rate of the air that passes through each of the heat exchangers so as to adjust an air conditioning temperature.

As a temperature adjustor of the air in a vehicular air conditioner, not only the air mixing doors but also various other devices have been proposed to adjust factors such as flow rates of the air that passes through a cooling heat exchanger and a heating heat exchanger and mixing ratios of cooled air and heated air.

For example, Patent Literature 1 discloses a proposition in which a heated air guide passage is disposed at a confluent position of a heated air passage and a cooled air passage in a case so that the heated air guide passage causes part of heated air from the heated air passage to turn to intersect a cooled air flow. As illustrated in Fig. 8 (corresponding to Fig. 1 of Patent Literature 1), a guide A, as illustrated in Fig. 9 (corresponding to Fig. 2 of Patent Literature 1), is disposed in an intersecting area of cooled air from a cooling heat exchanger and heated air from a heating heat exchanger in the case. According to this proposition, in order to decrease flowing resistance of the cooled air while securing a supply amount of the heated air, heated air guide members are disposed across the cooled air flow to cause part of the heated air from the heated air passage to turn toward an outlet (defroster vent) . Guide members are also provided to mix the rest of the heated air with the cooled air.

Patent Literature 2 discloses a proposition in which to wholly uniformize a distribution of air passing through a cooling heat exchanger so as to enhance cooling capacity when a ventilation outlet is formed in an upper portion of a casing, passages B1 and B2 are respectively formed above and below a heating heat exchanger, as illustrated in Fig. 10 (corresponding to Fig. 1 of Patent Literature 2), to bypass the air that has passed through the cooling heat exchanger.
Patent Literature 1: JP-A-2009-227026
Patent Literature 2: JP-A-2017-74814

As described above, with these vehicular air conditioners, attempts have been made to provide an optimum temperature environment by appropriately mixing the cooled air that has flowed from the cooling heat exchanger with the heated air that has flowed from the heating heat exchanger.

However, when such a vehicular air conditioner provides cooled air or heated air or mixture of cooled air and heated air for the interior of a cabin, it is necessary to supply the air to outlet vents of the vehicular air conditioner, such as a defroster outlet vent, a ventilation outlet vent, and a foot outlet vent, and also to control mixing of cooled air and heated air in the case of a bilevel mode. In the bilevel mode, air adjusted in temperature is simultaneously blown out of the ventilation outlet vent and the foot outlet vent. In order to secure cabin occupants' comfort, a temperature of foot outlet air from the foot outlet vent needs to be made higher than a temperature of ventilation outlet air from the ventilation outlet vent. Moreover, a temperature difference between the foot outlet air and the ventilation outlet air needs to be in an appropriate temperature range.

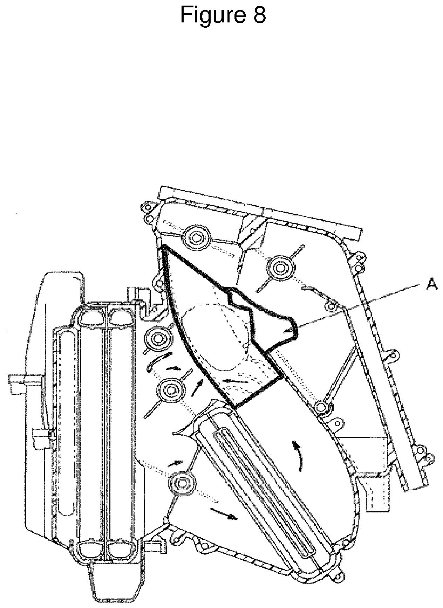

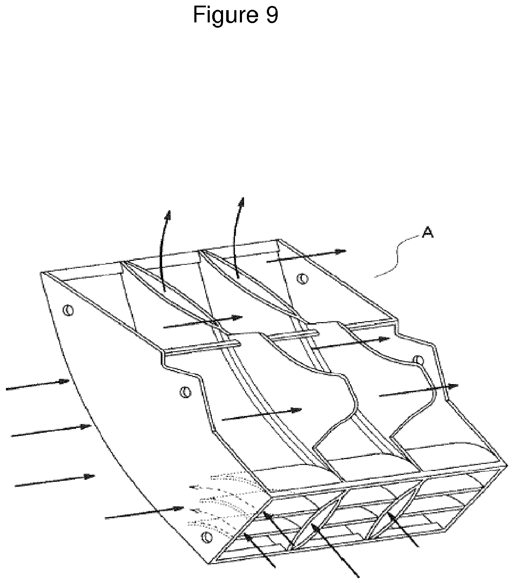

In the vehicular air conditioner disclosed in Patent Literature 1 described above, because the heating heat exchanger is disposed on an inner bottom surface of the case, there is still need to devise more appropriate mixing of cooled air and heated air in air mixing space (mixing region) formed at a downstream side of and above the heating heat exchanger with the guide A for temperature adjustment, as illustrated in Figs. 8 and 9.

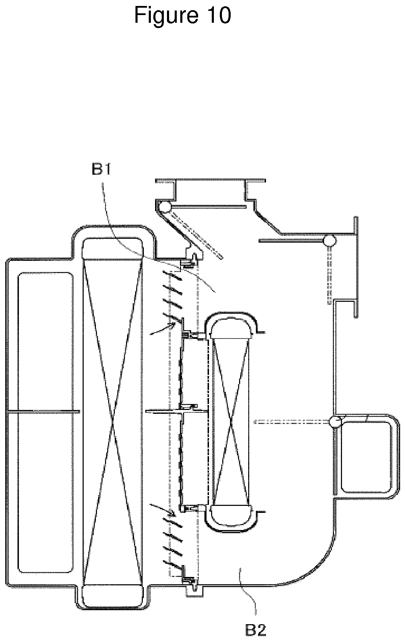

As disclosed in Patent Literature 2, because the heating heat exchanger is disposed in the center of the casing in a vertical direction (see Fig. 10), two mixing regions of the cooled air and the heated air are formed at upper and lower positions inside the casing so that improvement of a temperature adjustment function can be expected. However, in the bilevel mode, because the passage B2 formed below the heating heat exchanger is in close vicinity of the foot outlet vent, an inflow of the cooled air to the foot outlet vent is increased in a manner different from the vehicular air conditioner of Patent Literature 1. Consequently, a temperature of the foot outlet air becomes lower than a temperature of the ventilation outlet air. This may result in difficulty in securing cabin occupants' comfort.

### SUMMARY OF THE INVENTION

In order to solve the above-described circumstances, an object of the invention is to provide a vehicular air conditioner having a heating heat exchanger disposed at a vertically central position inside of a casing so as to make a temperature of air from a foot outlet higher than a temperature of air from a ventilation outlet by an appropriate difference even in the bilevel mode.

According to the invention, a vehicular air conditioner includes a casing, a cooling heat exchanger, and a heating heat exchanger. The casing includes an upper outlet and a lower outlet that are configured to blow out air into a cabin. The cooling heat exchanger is disposed in the casing. The heating heat exchanger is disposed in the casing and configured to heat the air that has flowed from the cooling heat exchanger. The heating heat exchanger is disposed at such a position that an upper bypass and a lower bypass are respectively formed above and below the heating heat exchanger. The air that has flowed from the cooling heat exchanger flows through the upper bypass and the lower bypass. The vehicular air conditioner further includes a first cooled air guide configured to cause part of the air that has passed through the lower bypass to turn toward the upper outlet.

In the vehicular air conditioner, the upper outlet includes a defroster outlet and a ventilation outlet. The first cooled air guide is configured to cause part of the air that has passed through the lower bypass to turn toward the ventilation outlet.

In the vehicular air conditioner, the ventilation outlet includes an upper ventilation outlet and a lower ventilation outlet disposed below the upper ventilation outlet. The first cooled air guide is configured to cause part of the air that has passed through the lower bypass to turn toward the lower ventilation outlet.

The vehicular air conditioner further includes a second cooled air guide configured to cause part of the air that has passed through the upper bypass to turn toward the lower ventilation outlet.

The vehicular air conditioner further includes a heated air guide configured to cause part of the air that has flowed from the heating heat exchanger to turn toward the upper ventilation outlet.

The vehicular air conditioner further includes a second cooled air guide and a heated air guide. The second cooled air guide is configured to cause part of the air that has passed through the upper bypass to turn toward the lower ventilation outlet. The heated air guide is configured to cause part of the air that has flowed from the heating heat exchanger to turn toward the upper ventilation outlet.

In the vehicular air conditioner, one of the upper ventilation outlet and the lower ventilation outlet is a center ventilation outlet, and the other of the upper ventilation outlet and the lower ventilation outlet is a side ventilation outlet.

In the vehicular air conditioner, the first cooled air guide and the second cooled air guide are configured to cause the air supplied to the upper ventilation outlet and the lower ventilation outlet to have substantially the same temperature.

The vehicular air conditioner further includes an opening control mechanism disposed on a front surface of an air inlet of the heating heat exchanger and configured to regulate an inflow to the heating heat exchanger.

In the vehicular air conditioner, the first cooled air guide is an individual component detachable from the casing.

The invention provides the vehicular air conditioner including the first cooled air guide, as a temperature adjustment guide, having a passage where cooled air exclusively flows. With this configuration, the vehicular air conditioner having the heating heat exchanger located at a vertically central position in the casing makes a temperature of air from the foot outlet higher than a temperature of air from the ventilation outlet by an appropriate difference even in the bilevel mode.

### BRIEF DESCRIPTION OF THE DRAWINGS

Fig. 1 is a cross-sectional view of a vehicular air conditioner according to a first embodiment of the invention, illustrating an essential configuration of the air conditioner.
Fig. 2 is a perspective view of a first cooled air guide as a first embodiment of a temperature adjustment guide for use in the vehicular air conditioner according to the invention.
Fig. 3 is a cross-sectional view of a vehicular air conditioner according to a second embodiment of the invention, illustrating an essential configuration of the air conditioner.
Fig. 4 is a perspective view of a combination of the first cooled air guide and a second cooled air guide as a second embodiment of the temperature adjustment guide for use in the vehicular air conditioner according to the invention, illustrating a configuration of the combination.
Fig. 5 is a perspective view of a combination of the first cooled air guide and a heated air guide as a third embodiment of the temperature adjustment guide for use in the vehicular air conditioner according to the invention, illustrating a configuration of the combination.
Fig. 6 is a perspective view of a combination of the first cooled air guide, the second cooled air guide, and the heated air guide as a fourth embodiment of the temperature adjustment guide for use in the vehicular air conditioner according to the invention, illustrating a configuration of the combination.
Fig. 7 is a cross-sectional view of a vehicular air conditioner, illustrating an example of using the temperature adjustment guide illustrated in Fig. 6 as the temperature adjustment guide for the vehicular air conditioner illustrated in Fig. 3.
Fig. 8 is a cross-sectional view of an exemplary vehicular air conditioner of the related art.
Fig. 9 is a perspective view of an exemplary temperature adjustment guide in the vehicular air conditioner in Fig. 8.
Fig. 10 is a cross-sectional view of another exemplary vehicular air conditioner of the related art.

### DESCRIPTION OF THE PREFERRED EMBODIMENTS

The invention relates to a vehicular air conditioner in which a heating heat exchanger is disposed at a vertically central position inside of a casing, and a cooled air guide is provided to cause part of the air that has flowed through a bypass formed below the heating heat exchanger to turn upward so as to improve a function of temperature adjustment of the air to each outlet. The invention will be described in detail below with reference to the accompanying drawings.

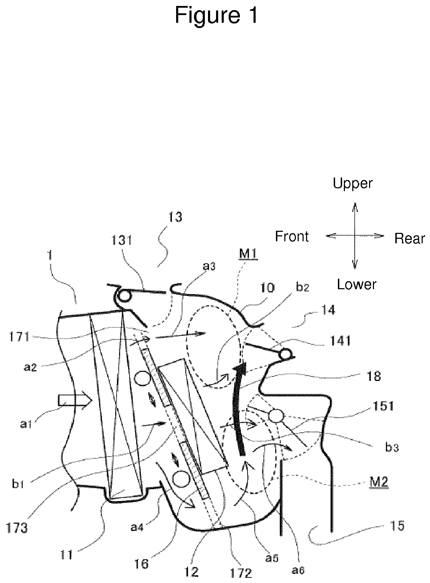

Fig. 1 is a cross-sectional view of an air conditioner for a vehicle according to a first embodiment of the invention, illustrating an essential configuration of the air conditioner. The vehicular air conditioner includes a blower unit to take in air from the inside and the outside of the vehicle and an air conditioning unit to receive the air from the blower unit, generate cooled air and heated air by heat exchangers, and supply the cooled air and heated air into a cabin. The vehicular air conditioner is disposed, for example, in a front portion of the interior of the cabin. Fig. 1 is a partial view of the vehicular air conditioner 1 and illustrates the air conditioning unit to which the invention pertains, and the blower unit is omitted from Fig. 1.

It should be noted that the vehicular air conditioner 1 illustrated in Fig. 1 has such an arrangement that a left side corresponds to a front side of a body of the vehicle, a right side corresponds to a rear side of the vehicle body, an upper side corresponds to an upper side of the vehicle body, and a lower side corresponds to a lower side of the vehicle body. A windshield (not illustrated) is disposed above the vehicular air conditioner 1. In an upper area on the rear side of the vehicular air conditioner 1, a space (not illustrated) is formed toward the upper bodies of a driver and a front-seat passenger. In a lower area on the rear side of the vehicular air conditioner 1, a space (not illustrated) is formed toward the feet of the driver and the front-seat passenger.

Referring to Fig. 1, the vehicular air conditioner 1 includes a cooling heat exchanger 11 and a heating heat exchanger 12 in a casing 10. The heating heat exchanger 12 is disposed at a vertically central position in the casing 10. Into this position, cooled air from the cooling heat exchanger 11 flows. In other words, the heating heat exchanger 12 is disposed to form an upper bypass 171 and a lower bypass 172 to respectively bypass cooled air to an upper side and a lower side of the heating heat exchanger 12. For this purpose, an air mixing mechanism 16 to pass or block cooled air output from the cooling heat exchanger 11 is disposed on a front surface of the heating heat exchanger 12. In an example illustrated in Fig. 1, the air mixing mechanism 16 includes a slide mechanism to vertically regulate an inflow to the heating heat exchanger 12. However, a rotary door mechanism including a rotary shaft and closing plates extending from the rotary shaft may be employed.

The air mixing mechanism 16 regulates the inflow of air to the heating heat exchanger 12 so as to adjust a ratio between cooled air and heated air to be input to mixing regions (an upper mixing region M1 and a lower mixing region M2) formed downstream.

In an upper portion of the casing 10, a defroster outlet 13 and a ventilation outlet 14 are disposed as an upper outlet. A foot outlet 15 is disposed as a lower outlet. From the defroster outlet 13, for example, air (defroster outlet air) for defogging and defrosting window panes such as the front windshield in the cabin is blown out. From the ventilation outlet 14, air (ventilation outlet air) for adjusting temperature in an upper space in the cabin is blown out. Generally, the ventilation outlet 14 includes a center ventilation outlet to blow out adjusted air toward the center in a vehicle lateral direction and side ventilation outlets to blow out adjusted air toward opposite sides in the vehicle lateral direction.

From the foot outlet 15, air (foot outlet air) for adjusting temperature in a space at the feet of the driver and the front-seat passenger is blown out. In the bilevel mode, to secure cabin occupants' comfort, adjusted air having a temperature higher than the ventilation outlet air is blown out of the foot outlet 15.

The defroster outlet 13, the ventilation outlet 14, and the foot outlet 15 respectively include a defroster door 131, a ventilation door 141, and a foot door 151 so that in response to a command from a control panel or such components not illustrated, the defroster outlet 13, the ventilation outlet 14, and the foot outlet 15 can be controlled into opening states of "Open", "Narrowed", and "Closed".

With this configuration, as illustrated in Fig. 1, air flows for air conditioning are as follows: an air flow a1 from the blower unit not illustrated all flows into the cooling heat exchanger 11, is cooled during operation of the cooling heat exchanger 11, and flows out of the cooling heat exchanger 11. In the air mixing mechanism 16 illustrated in Fig. 1, heated air and cooled air is mixed. Part of the cooled air that has flowed from the cooling heat exchanger 11 flows above the air mixing mechanism 16 as an air flow a2, subsequently passes through the upper bypass 171 as an air flow a3, and reaches the upper mixing region M1. Other part of the cooled air that has flowed from the cooling heat exchanger 11 flows below the air mixing mechanism 16 as an air flow a4, subsequently passes through the lower bypass 172 as an air flow a5, and reaches the lower mixing region M2.

Part of the cooled air that has flowed from the cooling heat exchanger 11 flows to a vertically central opening 173 of the air mixing mechanism 16 as an air flow b1 and subsequently flows into the heating heat exchanger 12. During operation of the heating heat exchanger 12, the air is heated and flows out of the heating heat exchanger 12. Part of the heated air that has flowed from the heating heat exchanger 12 reaches the upper mixing region M1 as an air flow b2. Other part of the heated air that has flowed from the heating heat exchanger 12 reaches the lower mixing region M2 as an air flow b3.

The air flow (cooled air) a3 and the air flow (heated air) b2 that have reached the upper mixing region M1 are mixed to a predetermined degree and adjusted in temperature. The air flow (cooled air) a5 and the air flow (heated air) b3 that have reached the lower mixing region M2 are mixed to a predetermined degree and adjusted in temperature.

In the bilevel mode, as illustrated in Fig. 1, the defroster outlet 13 is closed by the defroster door 131, the ventilation outlet 14 is narrowed in opening degree by the ventilation door 141, and the foot outlet 15 is narrowed in opening degree by the foot door 151. As a result, most of the air adjusted in the upper mixing region M1 flows into the ventilation outlet 14 in close vicinity, and most of the air adjusted in the lower mixing region M2 flows into the foot outlet 15 in close vicinity. Take notice of the air flow a5, in particular, that reaches the lower mixing region M2. Most of the air flow a5 enters the foot outlet 15 as an air flow a6. This is undesirable in consideration of the temperature difference required for the bilevel mode to secure cabin occupants' comfort, that is, temperature of the foot outlet air being higher than temperature of the ventilation outlet air.

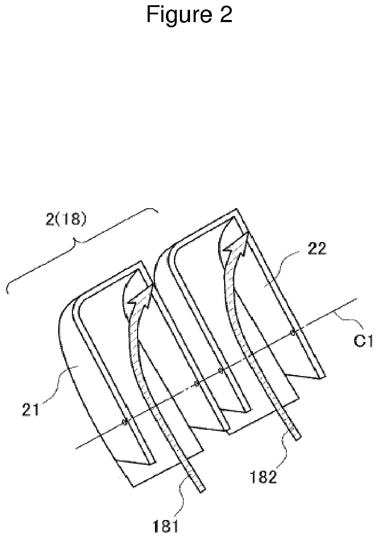

In view of this, according to the invention, the heating heat exchanger 12 is at the vertically central position in the casing 10, and a cooled air guide (first cooled air guide) 18 is disposed to cause part of the air flow (cooled air) a5 passing through the lower bypass 172 to turn in a direction to cross the air flow (heated air) b3 flowing through the lower mixing region M2 toward the foot outlet 15 so as to forcibly turn part of the air flow a5 toward the ventilation outlet 14 located above the foot outlet 15. An exemplary configuration of this cooled air guide (first cooled air guide) 18 will be described with reference to Fig. 2.

Fig. 2 is a perspective view of the cooled air guide (first cooled air guide) as a first embodiment of a temperature adjustment guide for use in the vehicular air conditioner according to the invention.

Referring to Fig. 2, a cooled air guide 2 (corresponding to the cooled air guide 18 illustrated in Fig. 1) includes a cooled air guide member 21 and a cooled air guide member 22. The cooled air guide members 21 and 22 illustrated in Fig. 2 are each formed to have a lower portion with an open end and an upper portion curved, and are each shaped as a groove from the lower portion to the upper portion. The grooves function as cooled air passages 181 and 182 to turn air flows.

The cooled air guide 2 (cooled air guide member 21 and cooled air guide member 22) is disposed at a predetermined position on the rear side of the heating heat exchanger 12 in the vehicular air conditioner 1 using components such as an attachment shaft C1 (not illustrated) of the casing 10 illustrated in Fig. 1. The cooled air guide 2 causes the air flow (cooled air) a5 that has passed through the lower bypass 172 below the heating heat exchanger 12 to turn toward the ventilation outlet 14 located above. That is, in the embodiment illustrated in Fig. 1 in which the defroster outlet 13 and the ventilation outlet 14 are provided as the upper outlet, the cooled air guide 2 (18) is provided to cause part of the air (cooled air) that has passed through the lower bypass 172 to turn toward the ventilation outlet 14.

With this configuration, in the bilevel mode for supplying conditioned air to both of the ventilation outlet 14 and the foot outlet 15, an amount of the air flowing into the foot outlet 15 can be decreased (limited). This reduces a temperature decrease of air (foot outlet air) blown out of the foot outlet 15 located below. Moreover, an amount of the cooled air flowing into the ventilation outlet 14 can be increased. This decreases a temperature of air (ventilation outlet air) blown out of the ventilation outlet 14 located above. Thus, it becomes possible to obtain the temperature difference required for the bilevel mode to secure cabin occupants' comfort, that is, to make temperature of the foot outlet air higher than temperature of the ventilation outlet air (to provide a temperature condition to keep the head cool and the feet warm).

It should be noted that although Fig. 2 illustrates the cooled air guide (first cooled air guide) including the two cooled air guide members, the invention is not limited to the illustrated example but may be suitably changed to a single-component configuration or a multistage configuration.

The cooled air guide is an individual component detachable from the casing. Consequently, even when the cooled air guide is changed in shape for adjusting a turning amount of cooled air to the upper outlet (ventilation outlet), the cooled air guide can be effectively improved without affecting the casing.

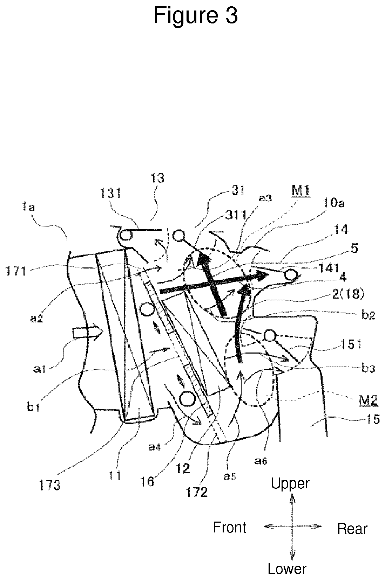

Fig. 3 is a cross-sectional view of a vehicular air conditioner according to a second embodiment of the invention, illustrating an essential configuration of the air conditioner. In Fig. 3, the same reference numerals and signs as in Fig. 1 denote identical components. In a similar manner to Fig. 1, Fig. 3 is a partial view of a vehicular air conditioner 1a and illustrates an air conditioning unit to which the invention pertains, and a blower unit is omitted from Fig. 3. In Fig. 3, a left side corresponds to the front side of a vehicle body, a right side corresponds to the rear side of the vehicle body, an upper side corresponds to the upper side of the vehicle body, and a lower side corresponds to the lower side of the vehicle body.

The vehicular air conditioner 1a in Fig. 3 is substantially the same as the vehicular air conditioner 1 in Fig. 1 in that the cooling heat exchanger 11 and the heating heat exchanger 12 are disposed in a casing 10a, and that the heating heat exchanger 12 is located at a vertically central position in the casing 10a. Into this position, cooled air from the cooling heat exchanger 11 flows.

Referring to Fig. 3, as an upper outlet in an upper portion of the casing 10a of the vehicular air conditioner 1a, an upper ventilation outlet 31 and an upper ventilation door 311 are disposed above the ventilation outlet 14. In this embodiment, the ventilation outlet 14 is a center ventilation outlet to blow out adjusted air toward the center in the cabin in the lateral direction. The upper ventilation outlet 31 includes side ventilation outlets to blow out adjusted air toward left and right inner surfaces of the cabin in the lateral direction. That is, as these outlets, the defroster outlet 13 is located on an upper side, the side ventilation outlets (upper ventilation outlet) 31 are located on a rear side of the defroster outlet 13, and the center ventilation outlet (lower ventilation outlet) 14 is located on a rear side of and below the side ventilation outlets. The configuration illustrated in Fig. 3 functions effectively using the above-described cooled air guide illustrated in Fig. 2.

With this configuration to which the side ventilation outlets (upper ventilation outlet) 31 are added, in the bilevel mode, as illustrated in Fig. 3, the defroster outlet 13 is closed by the defroster door 131, the side ventilation outlets 31 are each narrowed in opening degree by the side ventilation door 311, the center ventilation outlet 14 is narrowed in opening degree by the center ventilation door 141, and the foot outlet 15 is narrowed in opening degree by the foot door 151. As a result, most of cooled air that has flowed above the air mixing mechanism 16 as the air flow a2 and passed through the upper bypass 171 flows into the side ventilation outlets 31 without reaching the upper mixing region M1.

Meanwhile, adjusted air mainly including the air flow (heated air) b2 that has flowed from the heating heat exchanger 12 flows into the center ventilation outlet 14. This makes center ventilation outlet air have a higher temperature than side ventilation outlet air. A temperature difference thus made may unfortunately degrade cabin occupants' comfort.

In view of this, providing the above-described cooled air guide (first cooled air guide) 2 (18) illustrated in Fig. 2 becomes effective. That is, the cooled air guide 2 (18) causes part of the cooled air that has passed through the lower bypass 172 to turn toward the center ventilation outlet (lower ventilation outlet) 14 so as to prevent a temperature decrease of foot outlet air and make a temperature of the foot outlet air higher than a temperature of ventilation outlet air (to provide temperature conditions to keep the head cool and the feet warm). Moreover, a temperature of center ventilation outlet air is decreased to reduce a temperature difference between the side ventilation outlet air and the center ventilation outlet air or make the side ventilation outlet air and the center ventilation outlet air have substantially the same temperature.

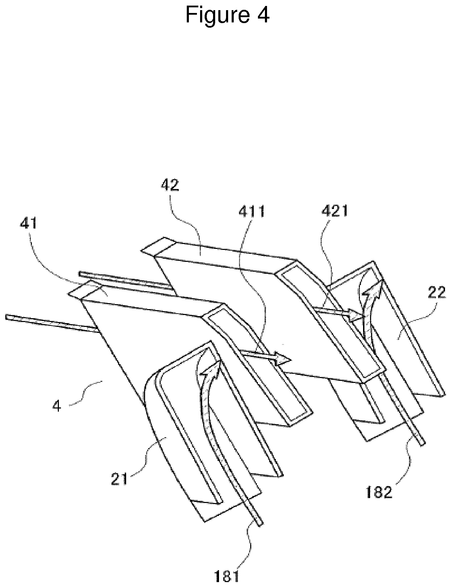

Referring to Fig. 3, it is also effective to add a cooled air guide to reduce a temperature difference between the side ventilation outlet air and the center ventilation outlet air. That is, to the center ventilation outlet 14 on the rear side of the side ventilation outlets 31, while part of the cooled air passing through the lower bypass 172 is supplied using the first cooled air guide 2 (18), part of the cooled air passing through the upper bypass 171 may be supplied using another cooled air guide. As an example of providing the two cooled air guides, a configuration of the cooled air guides will be described with reference to Fig. 4.

Fig. 4 is a perspective view of a combination of the first cooled air guide and a second cooled air guide as a second embodiment of the temperature adjustment guide for use in the vehicular air conditioner according to the invention, illustrating a configuration of the combination.

Referring to Fig. 4, the cooled air guides include the cooled air guide member 21 and the cooled air guide member 22 that constitute the first cooled air guide 2 described above with reference to Fig. 2, and a cooled air guide member 41 and a cooled air guide member 42 provided as a second cooled air guide 4. With the first cooled air guide 2 and the second cooled air guide 4 being located at the positions illustrated in Fig. 3, the first cooled air guide members 21 and 22 respectively provide the cooled air passages 181 and 182 to cause part of the cooled air that has passed through the lower bypass 172 to turn toward the center ventilation outlet 14 located above, and the second cooled air guide 4 provides (the cooled air guide members 41 and 42 respectively provide) cooled air passages 411 and 421 to cause part of the cooled air that has passed through the upper bypass 171 to turn toward the center ventilation outlet 14 in the lateral direction (rearward).

In this manner, while part of the air flow (cooled air) a5 that has passed through the lower bypass 172 is turned to the center ventilation outlet 14 by the first cooled air guide 18, part of the air flow (cooled air) a2 that has passed through the upper bypass 171 is additionally turned to the center ventilation outlet 14 by the second cooled air guide 4. The arrangement of these cooled air guides reduces a temperature difference between conditioned air flow to the side ventilation outlets 31 and conditioned air flow to the center ventilation outlet 14 or makes these two kinds of air flow have substantially the same (identical) temperature. It should be noted that the cooled air or mixed air thus supplied is adjustable also by dimensions, such as lengths and widths, of the cooled air guide members and the number of the guide members of each cooled air guide. Although the cooled air guides (first cooled air guide and second cooled air guide) illustrated in Fig. 4 each include two cooled air guide members, the invention is not limited to the illustrated example but may be suitably changed to a single-component configuration or a multistage configuration.

As illustrated in Fig. 3, even when the defroster outlet 13, the side ventilation outlets 31, and the center ventilation outlet 14 constitute the upper outlet, use of the second cooled air guide 4 makes it possible to cause part of the air (cooled air) that has passed through the upper bypass 171 to turn toward the center ventilation outlet 14. With this configuration, even when temperature-adjusted defroster outlet air is blown out of the defroster outlet 13, for example, in the DEF/FOOT mode, an amount of air (cooled air) that has passed through the upper bypass 171 and flowed into the defroster outlet 13 is limited (decreased) to reduce occurrence of what is called a cool-DEF phenomenon of window panes being fogged.

Because the side ventilation outlets 31 are close to the upper bypass 171, air (cooled air) that has passed through the upper bypass 171 is likely to flow into the side ventilation outlets 31 and decrease a temperature of the air blown out. However, the second cooled air guide 4 is provided to limit (decrease) an amount of air (cooled air) that flows into the side ventilation outlets 31 and prevent a temperature decrease of the air blown out. Therefore, as described above, it becomes possible to reduce a temperature difference between the air blown out of the side ventilation outlets 31 and the air blown out of the center ventilation outlet 14 or make the side ventilation outlet air and the center ventilation outlet air have substantially the same temperature.

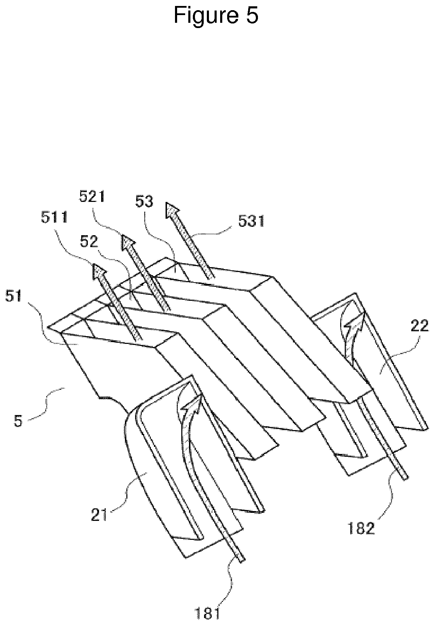

Now take notice of heated air. Referring to Fig. 3, part of heated air output from the heating heat exchanger 12 flows into the center ventilation outlet 14 and the side ventilation outlets 31 as indicated by the air flow (heated air) b2, and other part of the heated air flows into the foot outlet 15 as indicated by the air flow (heated air) b3. When the ventilation outlets are located at different positions in the fore-and-aft direction, an amount of heated air supply to the outlet located on the rear side (the center ventilation outlet 14 in this embodiment) is increased. In order to keep balance of heated air temperature, it is also effective to provide a heated air guide 5. A configuration of the heated air guide will be described with reference to Fig. 5.

Fig. 5 is a perspective view of a combination of the first cooled air guide and a heated air guide as a third embodiment of the temperature adjustment guide for use in the vehicular air conditioner according to the invention, illustrating a configuration of the combination.

Referring to Fig. 5, the cooled air guide includes the cooled air guide member 21 and the cooled air guide member 22 that constitute the first cooled air guide 2 described above with reference to Fig. 2. In an illustrated example, the heated air guide 5 includes a heated air guide member 51, a heated air guide member 52, and a heated air guide member 53. With the cooled air guide 2 and the heated air guide 5 being located at the positions illustrated in Fig. 3, the first cooled air guide members 21 and 22 respectively provide the cooled air passages 181 and 182 to cause part of the cooled air that has passed through the lower bypass 172 to turn toward the center ventilation outlet 14 located above, and the heated air guide 5 provides (the heated air guide members 51, 52, and 53 respectively provide) heated air passages 511, 521, and 531 to cause part of heated air output from the heating heat exchanger 12 to turn toward the side ventilation outlets 31. It should be noted that the cooled air or mixed air thus supplied is adjustable also by dimensions, such as lengths and widths, of the cooled air guide members and the heated air guide members and the number of the guide members of each guide. The cooled air guide members and the heated air guide members illustrated in Fig. 5 are not limited to the illustrated example but may be suitably changed to a single-component configuration or a multistage configuration.

In this manner, even in mixed operation for cooling and heating, when part of the air flow (cooled air) that has passed through the upper bypass 171 reaches the side ventilation outlets 31, part of the air flow (heated air) b2 that has flowed from the heating heat exchanger 12 is additionally turned toward the side ventilation outlets 31 by the heated air guide 5. Also, when part of the air flow (heated air) b2 that has flowed from the heating heat exchanger 12 reaches the center ventilation outlet 14, part of the air flow (cooled air) that has passed through the lower bypass 172 is additionally turned toward the center ventilation outlet 14 by the cooled air guide 2 (21 and 22) .

Even with no heated air guide, part of the air (heated air) that has flowed from the heating heat exchanger 12 may reach the side ventilation outlets 31. However, because the side ventilation outlets 31 are close to the upper bypass 171, air (cooled air) that has passed through the upper bypass 171 is likely to flow into the side ventilation outlets 31 and decrease a temperature of the air blown out. With the heated air guide 5, an amount of air (heated air) that flows into the side ventilation outlets 31 is regulated (increased) to increase a temperature of the air blown out. This reduces a temperature difference between the air blown out of the side ventilation outlets 31 and the air blown out of the center ventilation outlet 14 or make the side ventilation outlet air and the center ventilation outlet air have substantially the same temperature.

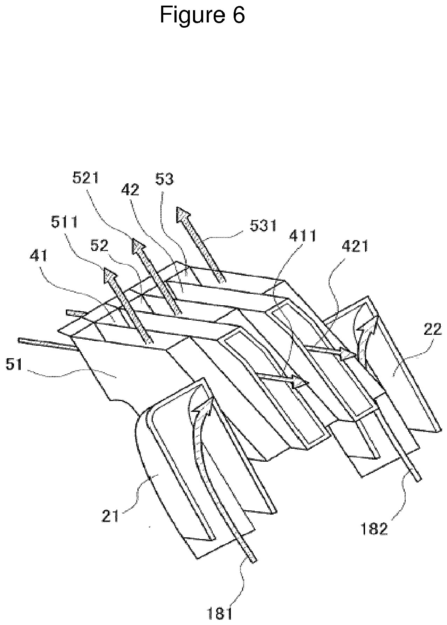

So far, referring to Fig. 3 illustrative of the first cooled air guide 2, the second cooled air guide 4, and the heated air guide 5 as the cooled air and heated air guides, the case of applying the first cooled air guide 2 illustrated in Fig. 2, the case of applying the first cooled air guide 2 and the second cooled air guide 4 illustrated in Fig. 4, and the case of applying the first cooled air guide 2 and the heated air guide illustrated in Fig. 5 have been each described. Furthermore, it is effective to provide a combination of the first and second cooled air guides and the heated air guide. A configuration including these guides will be described with reference to Fig. 6.

Fig. 6 is a perspective view of a combination of the first cooled air guide, the second cooled air guide, and the heated air guide as a fourth embodiment of the temperature adjustment guide for use in the vehicular air conditioner according to the invention, illustrating a configuration of the combination.

Referring to Fig. 6, the first cooled air guide 2 (cooled air guide members 21 and 22) is mainly used to turn cooled air toward the center ventilation outlet (lower ventilation outlet) 14. The cooled air passages 181 and 182 cause part of cooled air that has passed through the lower bypass 172 to turn toward the center ventilation outlet (lower ventilation outlet) 14 so as to reduce cooled air output to the foot outlet 15 and also keep balance with supply of cooled air to the side ventilation outlets (upper ventilation outlets) 31.

The second cooled air guide 4 (cooled air guide members 41 and 42) as well is mainly used to turn cooled air toward the center ventilation outlet (lower ventilation outlet) 14. The cooled air passages 411 and 421 cause part of cooled air that has passed through the upper bypass 171 to turn rearward to the center ventilation outlet 14.

The heated air guide 5 (heated air guide members 51, 52, and 53) is mainly used to turn heated air toward the side ventilation outlets (upper ventilation outlet) 31. The heated air passages 511, 521, and 531 cause part of heated air output from the heating heat exchanger 12 to turn toward the side ventilation outlets (upper ventilation outlet) 31 located above.

These temperature adjustment guides are disposed at the predetermined positions in the vehicular air conditioner illustrated in Fig. 3. This more reliably reduces a temperature difference between the air blown out of the side ventilation outlets (upper ventilation outlet) and the air blown out of the center ventilation outlet (lower ventilation outlet) or make the side ventilation outlet air and the center ventilation outlet air have substantially the same temperature.

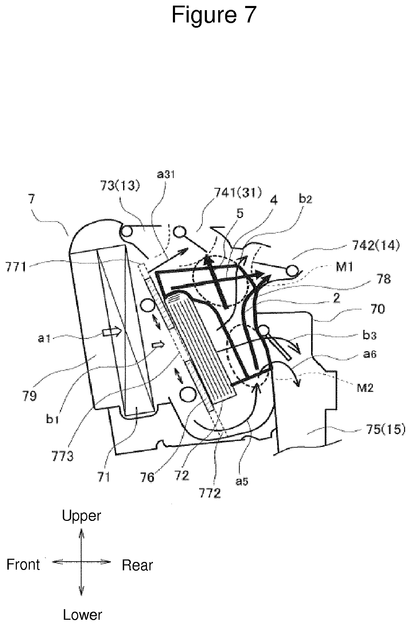

Fig. 7 is a cross-sectional view of a vehicular air conditioner, illustrating the example of using the temperature adjustment guides illustrated in Fig. 6 as the temperature adjustment guide for the vehicular air conditioner illustrated in Fig. 3. Although the vehicular air conditioner illustrated in Fig. 7 has substantially the same basic configuration as illustrated in Fig. 3, Fig. 7 more specifically illustrates arrangements of the cooled air guides, the heated air guide, and other components.

Referring to Fig. 7, in a vehicular air conditioner 7, air taken in from the inside and the outside of the vehicle is received at a blower vent 79 from a main body of the blower unit (not illustrated) and cooled by a cooling heat exchanger 71 in the air conditioning unit. An air mixing mechanism 76 controls a ratio of air flow (cooled air) bypassing a heating heat exchanger 72 to air flow passing through the heating heat exchanger 72 so as to supply temperature-adjusted air to the interior of the cabin. It should be noted that the vehicular air conditioner 7 illustrated in Fig. 7 has substantially the same arrangement relationship as illustrated in Figs. 1 and 3 in which a left side corresponds to the front side of the vehicle body, a right side corresponds to the rear side of the vehicle body, an upper side corresponds to the upper side of the vehicle body, and a lower side corresponds to the lower side of the vehicle body.

Referring to Fig. 7, the vehicular air conditioner 7 includes the cooling heat exchanger 71 (corresponding to reference numeral 11 in Fig. 3) and the heating heat exchanger 72 in a casing 70. The heating heat exchanger 72 (corresponding to reference numeral 12 in Fig. 3) is located at a vertically central position in the casing 70. Into this position, cooled air that has flowed from the cooling heat exchanger 71 flows. That is, the heating heat exchanger 72 is positioned to form an upper bypass 771 and a lower bypass 772 to respectively bypass the cooled air to an upper side and a lower side of the heating heat exchanger 72. On a front surface of the heating heat exchanger 72, the air mixing mechanism 76 (corresponding to reference numeral 16 in Fig. 3) is disposed to pass through or block cooled air output from the cooling heat exchanger 71. In a similar manner to the above-described embodiments, the air mixing mechanism 76 in an illustrated example includes a slide mechanism to vertically regulate an inflow to the heating heat exchanger 72. However, a rotary door mechanism including a rotary shaft and closing plates extending from the rotary shaft may be employed. The air mixing mechanism 76 regulates the inflow of the air to the heating heat exchanger 72 so as to control a ratio between cooled air and heated air input to mixing regions (the upper mixing region M1 and the lower mixing region M2) formed downstream.

In an upper portion of the casing 70, a defroster outlet 73 is disposed as the upper outlet, a side ventilation outlet 741 and a center ventilation outlet 742 are disposed as the ventilation outlet, and a foot outlet 75 is disposed as the lower outlet.

Referring to Fig. 7, air flows for air conditioning are similar to the air flows illustrated in Figs. 1 and 3 and as follows: the air flow a1 from the blower unit all flows into the cooling heat exchanger 71, is cooled during operation of the cooling heat exchanger 71, and flows out of the cooling heat exchanger 71. In the air mixing mechanism 76 illustrated in Fig. 7, heated air and cooled air is mixed. Part of the cooled air that has flowed from the cooling heat exchanger 71 flows above the air mixing mechanism 76, subsequently passes through the upper bypass 771 as an air flow a31, and reaches the upper mixing region M1. Other part of the cooled air that has flowed from the cooling heat exchanger 71 flows below the air mixing mechanism 76, passes through the lower bypass 772 as the air flow a5, and reaches the lower mixing region M2. The air partly joins the air flow a6.

Part of the cooled air that has flowed from the cooling heat exchanger 71 flows to a vertically central opening 773 of the air mixing mechanism 76 as the air flow b1 and subsequently flows into the heating heat exchanger 72. During operation of the heating heat exchanger 72, the air is heated and flows out of the heating heat exchanger 72. Part of the heated air that has flowed from the heating heat exchanger 72 reaches the upper mixing region M1 as the air flow b2. Other part of the heated air that has flowed from the heating heat exchanger 72 reaches the lower mixing region M2 as the air flow b3.

With this configuration, the invention provides a cooled-air and heated-air guide combination 78 to control flows of the cooled air and the heated air that has respectively flowed from the cooling heat exchanger 71 and the heating heat exchanger 72

The cooled-air and heated-air guide combination 78 illustrated in Fig. 7 corresponds to the guides illustrated in Fig. 6. The first cooled air guide 2 (cooled air guide members 21 and 22) is mainly used to turn cooled air toward the center ventilation outlet (lower ventilation outlet) 742. The cooled air passages 181 and 182 (omitted from Fig. 7) cause part of cooled air that has passed through the lower bypass 772 to turn toward the center ventilation outlet (lower ventilation outlet) 742 so as to reduce cooled air output to the foot outlet 75 and also keep balance with supply of cooled air to the side ventilation outlet (upper ventilation outlet) 741.

The second cooled air guide 4 (cooled air guide members 41 and 42 (omitted from Fig. 7)) as well is mainly used to turn cooled air toward the center ventilation outlet (lower ventilation outlet) 742. The cooled air passages 411 and 421 (omitted from Fig. 7) cause part of cooled air that has passed through the upper bypass 771 to turn in the lateral direction (rearward) toward the center ventilation outlet 742.

The heated air guide 5 (heated air guide members 51, 52, and 53 (omitted from Fig. 7)) is mainly used to turn heated air toward the side ventilation outlet (upper ventilation outlet) 741. The heated air passages 511, 521, and 531 (omitted from Fig. 7) cause part of heated air output from the heating heat exchanger 72 to turn toward the side ventilation outlet (upper ventilation outlet) 741 located above.

In this manner, the cooled air guides and the heated air guide regulate the air flow rates and ensure temperature adjustment. This more reliably reduces a temperature difference between the air blown out of the side ventilation outlet (upper ventilation outlet) and the air blown out of the center ventilation outlet (lower ventilation outlet) or make the side ventilation outlet air and the center ventilation outlet air have substantially the same temperature.

In the embodiment illustrated in Fig. 7, the guides illustrated in Fig. 6 is used as the temperature adjustment guide. However, as described above with reference to Fig. 3, the invention is applicable as various adjustment guides suitably in accordance with purposes, for example, the cooled air guide illustrated in Fig. 2, the combination of the first cooled air guide and the second cooled air guide illustrated in Fig. 4, and the combination of the cooled air guide and the heated air guide illustrated in Fig. 5.

It should be noted that in the vehicular air conditioners illustrated in Figs. 1, 3, and 7, determination may be made as necessary as to the number of guide members of each of the guides, and guide widths and heights, and the illustrated examples should not be construed in a limiting sense.

Obviously, flow rates and temperatures of the air to the respective outlets are adjusted by opening and closing operation of shutters or such components disposed on the front surface of the heating heat exchanger downstream of the cooling heat exchanger so as to regulate amounts (flow rates) of the cooled air that has flowed from the cooling heat exchanger and passes through the bypasses and an amount (flow rate) of the air input to the heating heat exchanger. That is, adjustment of turning amounts of air flows by the cooled air guides and the heated air guide according to the invention may produce a synergy effect with adjustment of the flow rates of the air output from the heat exchangers.

It should be noted that the embodiments and schematic configurations illustrated in Figs. 1 to 7 are provided for exemplary purposes only and should not be construed in a limiting sense. The invention is applicable to various other devices

The arrangements of the outlets illustrated in Figs. 1, 3, and 7 may be modified in various manners. The invention is not limited to the description of the ventilation outlets in which the upper ventilation outlet is the side ventilation outlet, and the lower ventilation outlet is the center ventilation outlet.

Since the illustrative embodiments set forth herein are provided for ease of understanding, it should be understood that this invention is not limited to the embodiments but defined in the claims. Modifications and alterations of the invention within the scope of the claims are to be protected unless they depart from the subject matter and spirit of the invention.

According to the invention, the cooled air guide and the heated air guide are suitably disposed in the vehicular air conditioner to optimize temperatures of the air from the outlets. The invention is industrially advantageous for vehicles and has a high industrial applicability.

### Description of Reference Numerals and Signs

1, 1a, 7: vehicular air conditioner
10, 10a, 70: casing
11, 71: cooling heat exchanger
12, 72: heating heat exchanger
13, 73: defroster outlet
131: defroster door
14: ventilation outlet, center ventilation outlet (lower ventilation outlet)
141: ventilation door
15, 75: foot outlet
151: foot door
16, 76: air mixing mechanism
171, 771: upper bypass
172, 772: lower bypass
173, 773: central opening
18: cooled air guide (first cooled air guide)
181, 182: cooled air passage
2, 21, 22: cooled air guide (member) (first cooled air guide)
31: upper ventilation outlet (side ventilation outlet)
311: second ventilation door
4, 41, 42: cooled air guide (member) (second cooled air guide)
411, 421: cooled air passage
5, 51, 52, 53: heated air guide (member)
511, 521, 531: heated air passage
741: side ventilation outlet (upper ventilation outlet)
742: center ventilation outlet (lower ventilation outlet)
78: cooled-air and heated-air guide combination
79: blower vent
M1: first mixing region
M2: second mixing region

## Claims

1. A vehicular air conditioner comprising:
a casing (10, 10a, 70) comprising an upper outlet and a lower outlet that are configured to blow out air into a cabin;
a cooling heat exchanger (11, 71) disposed in the casing; and
a heating heat exchanger (12, 72) disposed in the casing and configured to heat the air that has flowed from the cooling heat exchanger,
wherein the heating heat exchanger is disposed at such a position that an upper bypass (171, 771) and a lower bypass (172, 772) are respectively formed above and below the heating heat exchanger, and
wherein the air that has flowed from the cooling heat exchanger flows through the upper bypass and the lower bypass,
the vehicular air conditioner further comprising:
a first cooled air guide (18, 2) configured to cause part of the air that has passed through the lower bypass to turn toward the upper outlet.

2. The vehicular air conditioner according to claim 1,
wherein the upper outlet comprises a defroster outlet (13) and a ventilation outlet (14), and
wherein the first cooled air guide is configured to cause part of the air that has passed through the lower bypass to turn toward the ventilation outlet.

3. The vehicular air conditioner according to claim 2,
wherein the ventilation outlet comprises an upper ventilation outlet (31) and a lower ventilation outlet (14) disposed below the upper ventilation outlet, and
wherein the first cooled air guide is configured to cause part of the air that has passed through the lower bypass to turn toward the lower ventilation outlet.

4. The vehicular air conditioner according to claim 3, further comprising a second cooled air guide (4) configured to cause part of the air that has passed through the upper bypass to turn toward the lower ventilation outlet.

5. The vehicular air conditioner according to claim 3, further comprising a heated air guide (5) configured to cause part of the air that has flowed from the heating heat exchanger to turn toward the upper ventilation outlet.

6. The vehicular air conditioner according to claim 3, further comprising:
a second cooled air guide (4) configured to cause part of the air that has passed through the upper bypass to turn toward the lower ventilation outlet; and
a heated air guide (5) configured to cause part of the air that has flowed from the heating heat exchanger to turn toward the upper ventilation outlet.

7. The vehicular air conditioner according to any one of claims 3 to 6, wherein one of the upper ventilation outlet and the lower ventilation outlet is a center ventilation outlet, and another of the upper ventilation outlet and the lower ventilation outlet is a side ventilation outlet.

8. The vehicular air conditioner according to claim 6 or 7, wherein the first cooled air guide and the second cooled air guide are configured to cause the air supplied to the upper ventilation outlet and the lower ventilation outlet to have substantially a same temperature.

9. The vehicular air conditioner according to any one of claims 1 to 8, further comprising an opening control mechanism disposed on a front surface of an air inlet of the heating heat exchanger and configured to regulate an inflow to the heating heat exchanger.

10. The vehicular air conditioner according to any one of claims 1 to 9, wherein the first cooled air guide is an individual component detachable from the casing.
